## Europäisches Patentamt

## European Patent Office

## Office européen des brevets

(11) Veröffentlichungsnummer : **0 334 066 B1**

# (12) EUROPÄISCHE PATENTSCHRIFT

(45) Veröffentlichungstag der Patentschrift :
05.02.92 Patentblatt 92/06

(21) Anmeldenummer : **89103621.2**

(22) Anmeldetag : **02.03.89**

(51) Int. Cl.⁵ : **B01D 53/36**, F01N 3/28

(54) Gehäuse eines Abgaskatalysators für Brennkraftmaschinen.

(30) Priorität : **07.03.88 DE 3807416**

(43) Veröffentlichungstag der Anmeldung :
**27.09.89 Patentblatt 89/39**

(45) Bekanntmachung des Hinweises auf die
Patenterteilung :
**05.02.92 Patentblatt 92/06**

(84) Benannte Vertragsstaaten :
**DE ES FR GB IT SE**

(56) Entgegenhaltungen :
**DE-A- 2 302 746**
**DE-A- 3 400 684**
**FR-A- 2 591 277**
**FR-A- 2 593 553**

(73) Patentinhaber : **Bayerische Motoren Werke**
**Aktiengesellschaft**
**Patentabteilung AJ-30 Postfach 40 02 40**
**Petuelring 130**
**W-8000 München 40 (DE)**

(72) Erfinder : **Otto, Erhard**
**Plankenhofstrasse 35**
**W-8000 München 81 (DE)**

EP 0 334 066 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Gehäuse eines Abgaskatalysators nach dem Oberbegriff des Anspruchs 1 und geht aus von der gattungsbildenden DE-A-3602134.

Zur Reinigung von Brennkraftmaschinen-Abgasen kommen neben keramischen Trägermonolithen für die katalytische Schicht in zunehmendem Maße auch metallische Trägerkörper zum Einsatz. Um dabei den Bauaufwand gering zu halten, bildet die Mantelwand jenes Trägerkörpers zugleich einen Teil des Abgaskatalysator-Gehäuses. Wie die oben genannte Schrift zeigt, werden an die Mantelwand ein Zulauf- und ein Ablaufstutzen angeschweißt ; der metallische Trägerkörper seinerseits ist mit der Mantelwand durch Löten verbunden.

Unter mechanischen Gesichtspunkten hat sich jene bekannte Anordnung bewährt ; hinsichtlich einer erfolgreichen Schadstoff-Konvertierung sind jedoch Verbesserungen vonnöten. Zur vollständigen Behandlung des maximal anfallenden Abgasstromes ist ein relativ großer Trägerkörper erforderlich. Dieser bereitet jedoch Probleme beim Anspringverhalten. So verstreicht eine unvertretbar lange Zeitspanne, bis nach einem Kaltstart der Brennkraftmaschine ein derartiger Abgaskatalysator seine Funktion aufnimmt. Aus diesem Grunde ist es naheliegend, den metallischen Trägerkörper in Analogie zu den keramischen Trägermonolithen mehrstückig auszuführen, wobei beispielsweise in einer bevorzugten Form der in Strömungsrichtung erste Trägerkörper kleiner ist als die nachfolgenden Trägerkörper.

Eine derartige mehrstückige Ausführung, wie sie beispielsweise in der DE-A-3400684 gezeigt ist, bereitet jedoch fertigungstechnische Probleme. So ist es Kaum möglich, die einzelnen Trägerkörper in einer einzigen Mantelwand paßgenau zu verlöten ; auch die sich an den Lötvorgang anschließende katalytische Beschichtung kann hierbei nicht mit ausreichender Genauigkeit erfolgen.

Aufgabe der Erfindung ist es daher, ein gattungsgemäßes Abgaskatalysator-Gehäuse mit zumindest zwei metallischen Trägerkörpern aufzuzeigen, welches unter Berücksichtigung optimaler Beschichtungsmöglichkeiten sowie paßgenauer Trägerkörper-Fixierung einfach zu fertigen ist. Diese Aufgabe wird durch die kennzeichnenden. Merkmale des ersten Anspruches gelöst.

Erfindungsgemäß ist ein Formteil vorgesehen, welches die Mantelwände der beiden Trägerkörper miteinander verbindet. Somit kann jeder einzelne Trägerkörper mit seiner Mantelwand separat gefertigt werden. Dies gewährleistet eine paßgerechte Fixierung sowie eine optimale Beschichtung. Indem diese Verbindung zwischen dem Formteil sowie der Mantelwand unlösbar und gasdicht ausgeführt ist, sind keine weiteren Verbindungs- oder Dichtelemente erforderlich. Eine gute Zugänglichkeit im Verbindungsbereich ist dabei gegeben, wenn die Endbereiche der Mantelwände über die Trägerkörper hinausragen. Letztgenanntes Merkmal ist darüberhinaus besonders vorteilhaft, wenn gemäß Anspruch 2 das Formteil mit den Mantelwänden verschweißt oder verlötet ist. Irgendwelche Schädigungen des Trägerkörpers durch die beim Schweißen bzw. Löten örtlich auftretenden kurzzeitigen Temperaturspitzen werden somit ausgeschlossen.

Umhüllt das Formteil die Mantelwände im Endbereich, ist das Formteil also auf der dem Trägerkörper abgewandten Seite der Mantelwand vorgesehen, so stellt dieses keinen hinderlichen Widerstand für die Strömung des Abgases im Katalysator dar. Um dabei das Formteil bezüglich der Mantelwände lagegenau zu positionieren, können am Formteil und/oder an den Mantelwänden im Endbereich vorzugsweise umlaufende Sicken vorgesehen sein.

Im folgenden wir die Erfindung anhand eines bevorzugten Ausführungsbeispieles näher beschrieben. Es zeigt :

Fig. 1 einen Halbschnitt durch ein Abgaskatalysator-Gehäuse, sowie

Fig. 2 die Einzelheit X aus Fig. 1 in abgewandelter Form.

Ein Abgaskatalysator-Gehäuse besteht im wesentlichen aus zwei metallischen Trägerkörpern 1a, 1b, deren Mantelwände 2a, 2b zugleich einen Teil des Gehäuses bilden, sowie einem Zulaufstutzen 3 und einem Ablaufstutzen 4. Die Mantelwände 2 sind mit den metallischen Trägerkörpern 1 wie bekannt durch Lötung verbunden. Die Verbindung zwischen den Mantelwänden 2 sowie dem Stutzen 3 bzw. 4 erfolgt durch eine symbolisch dargestellte umlaufende Schweißnaht 5, welche abseits des Trägerkörpers 1 vorgesehen ist, um eine eventuelle Schädigung dieses Trägerkörpers auszuschließen.

Um die beiden Trägerkörper 1a, 1b paßgerecht positionieren sowie optimal beschichten zu können, ist jedem dieser Trägerkörper eine separate Mantelwand 2a bzw. 2b zugeordnet. Diese sind erfindungsgemäß durch ein Formteil 6 miteinander verbunden. Dieses Formteil 6 ist dabei mit den Endbereichen der über die Trägerkörper 1 hinausragenden Mantelwände entlang einer Naht 5 verschweißt oder verlötet. Dies stellt zugleich eine gasdichte Verbindung sicher.

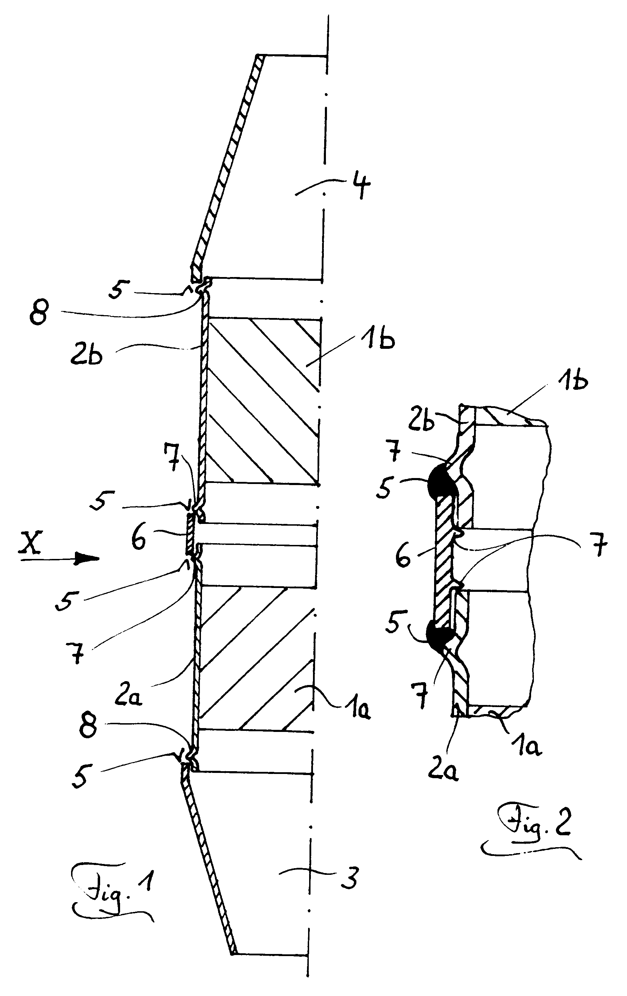

Zur genauen Positionierung des Formteiles 6 sind in den Mantelwänden zwei umlaufende Sicken 7 vorgesehen. Alternativ oder zusätzlich können derartige Sicken 7, wie Fig. 2 zeigt, auch am Formteil 6 vorgesehen sein. Im übrigen bestimmen ähnliche Sicken 8 die Position des Zulaufstutzens 3 bzw. des Ablaufstutzens 4. Insgesamt zeichnet sich vorliegendes Katalysatorgehäuse durch einfachste Konstruktion bei optimaler Gewährleistung der zu erfüllenden Funktion aus.

**Patentansprüche**

1. Gehäuse eines Abgaskatalysators für Brennkraftmaschinen mit zumindest zwei hintereinander angeordneten metallischen Trägerkörpern für die katalytische Schicht, deren Mantelwände einen Teil des Gehäuses bilden, dadurch gekennzeichnet, daß jeder Trägerkörper (1) eine Mantelwand (2a, 2b) aufweist und daß ein Formteil (6) die Endbereiche der über die Trägerkörper (1) hinausragenden Mantelwände (2) umlösbar und gasdicht miteinander verbindet.

2. Gehäuse nach Anspruch 1, dadurch gekennzeichnet, daß das Formteil (6) mit den Mantelwänden (2) verschweißt oder verlötet ist.

3. Gehäuse nach Anspruch 1 oder 2, dadurch gekennzeichnet, daß das Formteil (6) die Mantelwände (2) im Endbereich umhüllt.

4. Gehäuse nach einem der vorangegangenen Ansprüche, dadurch gekennzeichnet, daß das Formteil (6) und/oder die Mantelwände (2) im Endbereich mit die Lage des Formteiles (6) bestimmenden Sicken (7) versehen sind.

**Claims**

1. A cartridge of an exhaust gas catalyst for internal combustion engines, having at least two metallic carrier bodies for the catalytic coating which are arranged one behind the other and the peripheral walls of which form a part of the cartridge, characterised in that each carrier body (1) comprises a peripheral wall (2a, 2b) and in that a shaped part (6) connects the end zones of the peripheral walls (2), which protrude beyond the carrier bodies (1), non-detachably and gas-tightly with one another.

2. A cartridge according to Claim 1, characterised in that the shaped part (6) is welded or soldered with the peripheral walls (2).

3. A cartridge according to Claim 1 or 2, characterised in that the shaped part (6) envelopes the peripheral walls (2) in the end region.

4. A cartridge according to the preceding Claims, characterised in that the shaped part (6) and/or the peripheral walls (2) are provided in the end region with corrugations (7) which determine the position of the shaped part (6).

**Revendications**

1. Pot d'un catalyseur pour le traitement des gaz d'échappement de moteurs à combustion interne, avec au moins deux corps supports métalliques placés l'un derrière l'autre pour la couche catalytique, dont les parois métalliques forment une partie du pot, caractérisé en ce que chaque corps support (1) présente une paroi d'enveloppe (2a, 2b) et qu'une pièce moulée (6) relie les extrémités des parois d'enveloppe (2) qui dépassent des corps supports (1) de manière indescellable et de manière étanche.

2. Pot selon la revendication 1, caractérisé en ce qu'on soude ou brase la pièce moulée (6) avec la paroi d'enveloppe (2).

3. Pot selon la revendication 1 ou 2, caractérisé en ce que la pièce moulée (6) entoure les parois d'enveloppe (2) à leurs extrémités.

4. Pot selon l'une des revendications précédentes, caractérisé en ce que la pièce moulée (6) et/ou les parois d'enveloppe (2) à leurs extrémités, sont munies de sertissages (7) qui définissent la position de la pièce moulée (6).

Fig. 1

Fig. 2